# EUROPÄISCHE PATENTSCHRIFT

(11) **EP 2 429 856 B1**
(45) Veröffentlichungstag und Bekanntmachung des Hinweises auf die Patenterteilung: **06.08.2014**
(21) Anmeldenummer: 10734667.8
(22) Anmeldetag: 24.06.2010
(51) Int. Cl.: B60M 1/20, B60M 1/30

(54) **STROMSCHIENENANORDNUNG**
POWER SUPPLY RAIL ASSEMBLY
DISPOSITIF DE RAIL D'ALIMENTATION

(43) Veröffentlichungstag der Anmeldung: 21.03.2012
(73) Patentinhaber: Furrer + Frey AG, 3000 Bern 6 (CH)
(72) Erfinder: CASALI, Bruno, CH-3125 Toffen (CH); WILI, Urs Beat, CH-3074 Muri b. Bern (CH); FURRER, Beat, CH-3012 Bern (CH)
(74) Vertreter: von Bülow, Tam
(86) Internationale Anmeldenummer: PCT/EP2010/003782
(87) Internationale Veröffentlichungsnummer: WO 2011/160655

(56) Entgegenhaltungen:
- JP-A- 9 277 855
- JP-A- 57 107 922
- US-A- 4 230 209

## Beschreibung

Die Erfindung bezieht sich auf eine Stromschienenanordnung zur Speisung von elektrischen Triebfahrzeugen.

Die US 4,230,209A, vgl. Oberbegriff des Anspruchs der vorliegenden Erfidung, beschreibt eine Stromschienenanordnung mit einer starren Stromschiene, die einem Fahrdraht hält. Die Stromschiene ist an mehreren Stellen federelastisch an einem durchgehenden starren Profilkörper federelastisch aufgehängt, wobei der Profilkörper an mehreren Stellen an ortsfesten Tragwerken befestigt ist.

Die JP 57 10 7922 A zeigt eine Aufhängung für einen Fahrdraht mit einem starren Profilkörper, der mittig an einem ortsfesten Tragwerk befestigt ist. An dem Profilkörper sind mehrere federelastisch aufgehängte Tragelemente, an denen der Fahrdraht befestigt ist. Die Federn im Bereich der Enden des Profilkörpers sind weicher als die in der Mitte, so dass die Anhebekraft im mittleren Teil größer als in den Endbereichen ist. Der Fahrdraht soll damit die Form einer Kettenlinie erhalten.

Die JP 9 277855 A, vgl. Oberbegriff des Anspruchs der vorliegenden Erfidung, zeigt eine Stromschienenanordnung bei der eine durchgehende Stromschiene, die einen Fahrdraht hält, durch eine Vielzahl von Drähten an ortsfesten Tragwerken gehalten ist.

Die DE 20 2009 013 786 U1, vgl. Oberbegriff des Anspruchs 1 der vorliegenden Erfindung, zeigt eine Stromschienenanordnung, bei der eine Stromschiene über Anschlussplatten und federelastische, gelenkige Höhenverstelleinrichtungen mit ortsfesten Tragewerken verbunden ist. Die Tragwerke sind normalerweise in gleichmäßigen Abständen längs des Verlaufes der Stromschiene angeordnet.

Zur Justierung der Lage der Stromschiene gegenüber einer Fahrebene ist die Verbindung zwischen der Stromschiene und dem Tragwerk höhenverstellbar. Höhenverstellbare Stromschienenhaltevorrichtungen sind auch aus der DE 20 2004 009 416 U1 bekannt.

Für Hochgeschwindigkeitsstrecken, die mit 240km/h oder höher befahren werden, ist ein exakter Abstand zwischen Fahrdraht und Fahrgleis unabdingbar, um möglichst gleichmäßige Kontaktkräfte zwischen dem Stromabnehmer des Fahrzeuges und dem Fahrdraht zu haben. Sich ändernde Abstände führen zu Kontaktkraftschwankungen und damit Schwankungen des elektrischen Übergangswiderstandes, was unerwünschte Funkenbildung zur Folge hat und auch einen höheren Verschleiß am Stromabnehmer des Fahrzeuges und/oder am Fahrdraht, sei es durch Abrieb oder durch Funkenerosion.

Durch die aus der DE 20 2004 009 416 U1 bekannte Stromschienehaltevorrichtung läßt sich zwar die Höhenlage der Stromschiene über dem Gleis einstellen, jedoch nicht vermeiden, daß sich bei größeren Abständen zwischen benachbarten Tragwerken die Stromschiene aufgrund ihres Eigengewichtes durchbiegt. Gängige Abstände zwischen benachbarten Tragwerken liegen in der Größenordnung von 6 bis 15 Meter, so daß bei den verwendeten Stromschienenprofilen ein Durchhang der Stromschiene in der Größenordnung von ca. 7 mm auftritt, was für Hochgeschwindigkeitsstrecken nicht hinnehmbar ist. Die relativ trägen Stromabnehmer am Fahrzeug können dann dem Verlauf der Stromschiene nicht exakt folgen, so daß es zu unkontrollierten Schwingungen von Stromabnehmer und Stromschiene kommt und damit zu Schwankungen der Kontaktkräfte zwischen der Schleifleiste des Stromabnehmers und dem Fahrdraht, der von der Stromschiene gehalten wird.

Eine Lösung dieses Problems könnte darin bestehen die Abstände aufeinanderfolgender Tragwerke zu reduzieren. Dies bedingt jedoch einen erheblichen zusätzlichen Arbeits- und Materialaufwand, beispielsweise Bohrarbeiten, zusätzliche Tragwerke mit Isolatoren etc., so daß dieser Ansatz verworfen wurde.

Ein weiterer Ansatz wäre das Profil der Stromschiene zu verstärken, um Durchbiegungen zu reduzieren. Auch dies wurde wegen erhöhtem Materialaufwandes verworfen. Ein weiterer Ansatz wäre, die Stromschiene vorzubiegen, um so den Durchhang zwischen benachbarten Tragwerken zu kompensieren. Aufgrund des relativ geringen Durchhanges von den oben erwähnten 7 mm ist dieser Vorgang bei der üblichen Länge von Stromschienen von etwa 11,9 m und dem üblichen Abstand benachbarter Tragwerke in der Größenordnung von 6-15 m sehr schwer zu kontrollieren, wobei dann auch die entsprechende Vorbiegung genau auf die Lage der Tragwerke abgestimmt sein muß, was montagetechnisch zu erhöhtem Aufwand führt, da beispielsweise an Tunneleingängen und - ausgängen die Lage der Tragwerke bzw. Tragwerkabstand variieren kann. Daher wurde auch dieser Ansatz verworfen.

Ein weiterer Ansatz wäre die Stromschiene mit Spannkabeln vorzuspannen, um den Durchhang zu vermeiden. Da Stromschienen aber häufig in Tunnels und ähnlichen Bauwerken mit geringer Bauhöhe eingesetzt werden, hätten die Spannkabel gegenüber der Stromschiene einen sehr kleinen Winkel, was wiederum sehr hohe Zugkräfte erfordern würde, mit der Folge, daß die Stromschiene über ihre Querachse ausweichen würde, so daß auch dieser Vorschlag verworfen wurde.

Aufgabe der Erfindung ist es, die Stromschienenanordnung der eingangs genannten Art dahingehend zu verbessern, daß ein Durchhang der Stromschiene zwischen aufeinander folgenden Tragwerken weitestgehend vermieden wird, auch wenn der Abstand benachbarter Tragwerke so groß ist, daß ein Durchhang der Stromschiene auftritt. Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Grundgedanke der Erfindung besteht darin, die Stromschiene über Höhenverstelleinrichtungen an langgestreckten Profilkörpern zu befestigen, wobei die Profilkörper in der Mitte ihrer Längserstreckung über Halteeinrichtungen am Tragwerk befestigt sind. Die Profilkörper haben somit die Funktion von Hilfsträgern. Die Höhenverstelleinrichtungen bilden zusätzliche Stütz- oder Aufhängepunkte für die Profilschiene, ohne daß die Anzahl der Tragwerke erhöht bzw. der Abstand aufeinander folgender Tragwerke verringert werden muß.

Die langgestreckten Profilkörper haben aufgrund ihrer Form eine relativ hohe Biegesteifigkeit. Dadurch, daß die Stromschiene über Höhenverstelleinrichtungen an den Profilkörpern befestigt ist, kann auch eine Durchbiegung des Profilkörpers sowie natürlich auch eine Durchbiegung der Stromschiene kompensiert werden.

Vorzugsweise haben die Profilkörper ein U-förmiges Profil, das aus einfachen Blechen durch Abkanten hergestellt werden kann. Es sind aber auch andere biegesteife Profile möglich, wie zB T-Profile, Doppel-T-Profile oder Ähnliches.

Vorzugsweise ist die Stromschiene an jedem Profilkörper dreifach über Höhenverstelleinrichtungen befestigt und zwar bezogen auf die Längserstreckung der Profilkörper im mittleren Bereich und den beiden Endbereichen. Möglich ist jedoch auch, die Stromschiene in der Mitte des Profilkörpers starr zu befestigen und nur die Befestigung im Bereich der Enden des Profilkörpers höhenverstellbar auszugestalten oder umgekehrt.

Die Länge der Profilkörper ist so gewählt, daß die Aufhängepunkte der Profilschiene, also die Höhenverstelleinrichtungen in gleichmäßigen Abständen längs der Stromschiene verteilt angeordnet sind. Bei drei Höhenverstelleinrichtungen pro Profilkörper ergibt sich daraus eine Länge der Profilkörper von zwei Drittel des Abstandes benachbarter Halteeinrichtungen bzw. Tragwerken, wobei zwischen zwei in Längsrichtung der Stromschiene benachbarten Profilkörpern eine Lücke vorhanden ist, die ein Drittel des Abstandes zweier benachbarter Halteeinrichtungen beträgt.

Durch die Profilkörper (Hilfsträger) und die Höhenverstelleinrichtungen werden zusammengefaßt zusätzliche höhenjustierbare Aufhängepunkte für die Stromschiene geschaffen, ohne daß zusätzliche Tragwerke benötigt werden. Die Anzahl der Höhenverstelleinrichtungen und die Länge der Profilkörper können an die jeweiligen baulichen Gegebenheiten und die Anforderungen an die Genauigkeit des Abstandes zwischen Gleis und Fahrdraht angepaßt werden, wobei die oben angegebene Anzahl von drei Höhenverstelleinrichtungen pro Profilkörper und die angegebene Länge der Profilkörper nur als bevorzugtes Ausführungsbeispiel zu verstehen ist.

Nach einer Weiterbildung der Erfindung können die Halteeinrichtung, mit der der Profilkörper am Tragwerk befestigt wird und die im wesentlichen in der Mitte des Profilkörpers anzuordnende Höhenverstelleinrichtung in ein Bauelement integriert sein. Es ist aber auch möglich, die im Bereich der Mitte des Profilkörpers angeordnete Höhenverstelleinrichtung in Längsrichtung der Stromschiene gegenüber der Halteeinrichtung versetzt anzuordnen.

Vorzugsweise sind die Höhenverstelleinrichtungen und/oder die Halteeinrichtung federelastisch ausgebildet, so daß die Stromschiene und die Profilkörper gegeneinander und gegenüber dem Tragwerk elastisch gelagert sind, wodurch Schwingungen gedämpft und Schwingungskräfte gegenüber dem Tragwerk entkoppelt sind.

Weiter können die Höhenverstelleinrichtungen und die Halteeinrichtungen, wie an sich aus der DE 20 2009 013 786 U1 bekannt auch gelenkig ausgebildet sein, um zwangsläufig durch den Stromabnehmer eines vorbeifahrenden Fahrzeugs induzierte Schwingungen zu dämpfen und Zwängungen an der Stromschiene, die zu Aufschaukelungen von Schwingungen führen können, zu vermeiden.

Nach einer Weiterbildung der Erfindung ist der Profilkörper über ein zusätzliches elektrisch leitfähiges Stromkabel und einen Teil der Halteeinrichtung mit einer Stromversorgung verbunden. Weiterhin ist die Stromschiene an allen Höhenverstelleinrichtungen über ein elektrisch leitfähiges Stromkabel mit dem Profilkörper elektrisch verbunden. Hierdurch wird einerseits eine gute elektrische Verbindung geschaffen und sichergestellt, daß weder die Höhenverstelleinrichtungen noch die Halteeinrichtungen bei Funkenbildung miteinander verschweißen.

Im folgenden wird die Erfindung anhand eines Ausführungsbeispieles im Zusammenhang mit der Zeichnung ausführlicher erläutert. Es zeigt:
- Fig. 1: eine Seitenansicht einer Stromschienenanordnung nach einem Ausführungsbeispiel der Erfindung;
- Fig. 2: eine Draufsicht der Stromschienenanordnung der Fig. 1;
- Fig. 3: eine perspektivische Ansicht gesehen schräg von oben auf die Stromschienenanordnung der Fig. 1 und 2;
- Fig. 4: eine Seitenansicht eines Abschnittes der Stromschienenanordnung mit einem Profilkörper nach einem ersten Ausführungsbeispiel der Erfindung;
- Fig. 5: eine Draufsicht auf die Stromschienenanordnung der Fig. 4;
- Fig. 6: einen Schnitt längs der Linien A-A, B-B und C-C der Fig. 4;
- Fig. 7: einen Schnitt längs der Linie D-D der Fig. 4;
- Fig. 8: einen Querschnitt eines Profilkörpers nach einem ersten Ausführungsbeispiel der Erfindung;
- Fig. 9: eine Seitenansicht des Profilkörpers der Fig. 8;
- Fig. 10: eine Draufsicht des Profilkörpers der Fig. 8 und 9;
- Fig. 11 und 12: Seitenansichten der bei der Erfindung verwendeten Halteeinrichtung zur Befestigung des Profilkörpers an einem Tragwerk gemäß einem ersten Ausführungsbeispiel der Erfindung;
- Fig. 13: eine Draufsicht der Halteeinrichtung der Fig. 11 und 12;
- Fig. 14: eine perspektivische Ansicht der Halteeinrichtung der Fig. 11 bis 13;
- Fig. 15 und 16: Seitenansichten der Höhenverstellein- richtung zur Befestigung der Stromschiene an dem Profilkörper;
- Fig. 17: eine Draufsicht auf die Höhenverstelleinrichtung der Fig. 15 und 16;
- Fig. 18: eine perspektivische Ansicht der Höhenverstelleinrichtung der Fig. 15 bis 17; und
- Fig. 19: eine Seitenansicht eines Tragwerkes mit einer Stromschienenanordnung nach der Erfindung;
- Fig. 20: einen Querschnitt eines Profilkörpers nach einem zweiten Ausführungsbeispiel der Erfindung;
- Fig. 21: eine Draufsicht auf einen Profilkörper nach einem zweiten Ausführungsbeispiel der Erfindung;
- Fig. 22: eine Seitenansicht einer Stromschienenanordnung nach einem zweiten Ausführungsbeispiel der Erfindung;
- Fig. 23: eine Draufsicht auf die Stromschienenanordnung der Fig. 22;
- Fig. 24: einen Schnitt längs der Linie E-E der Fig. 22.

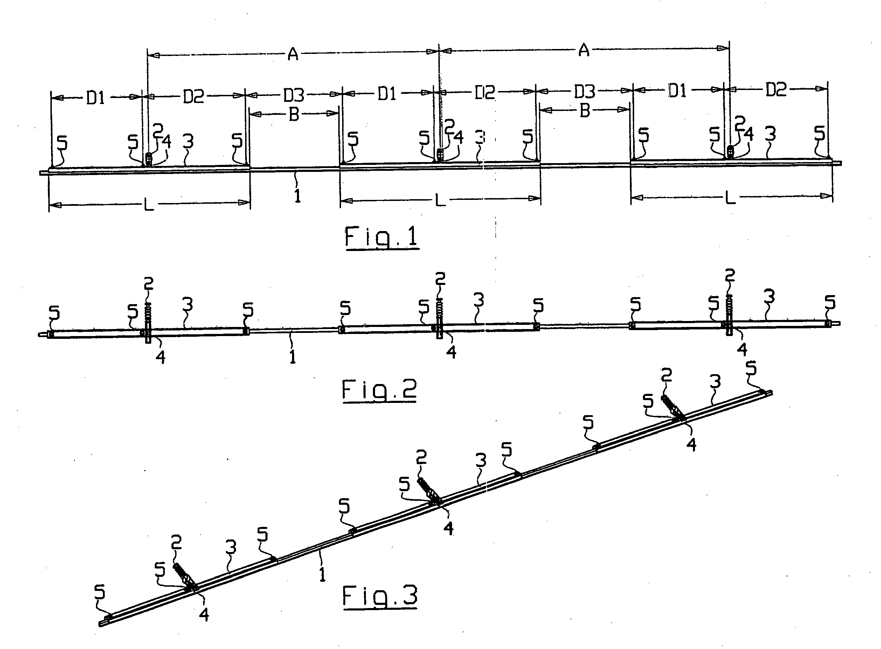

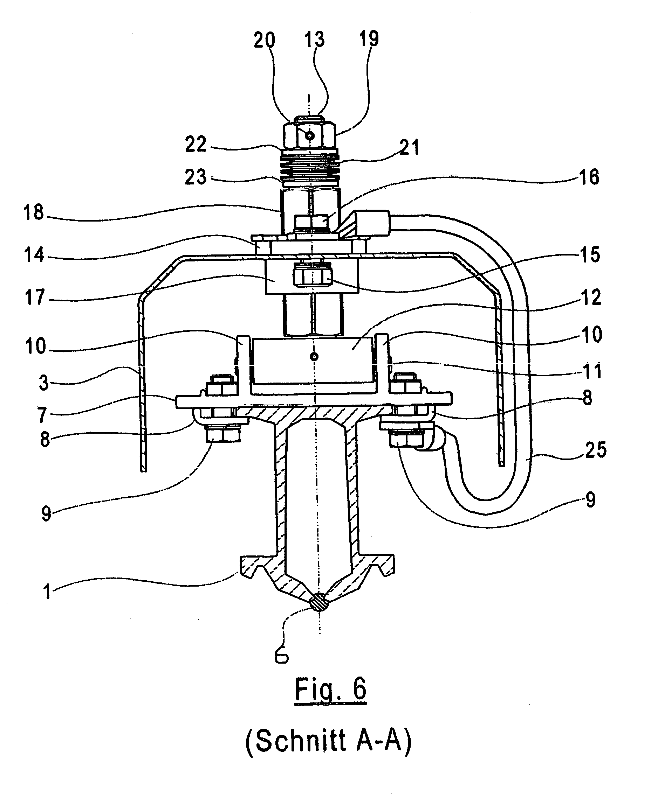

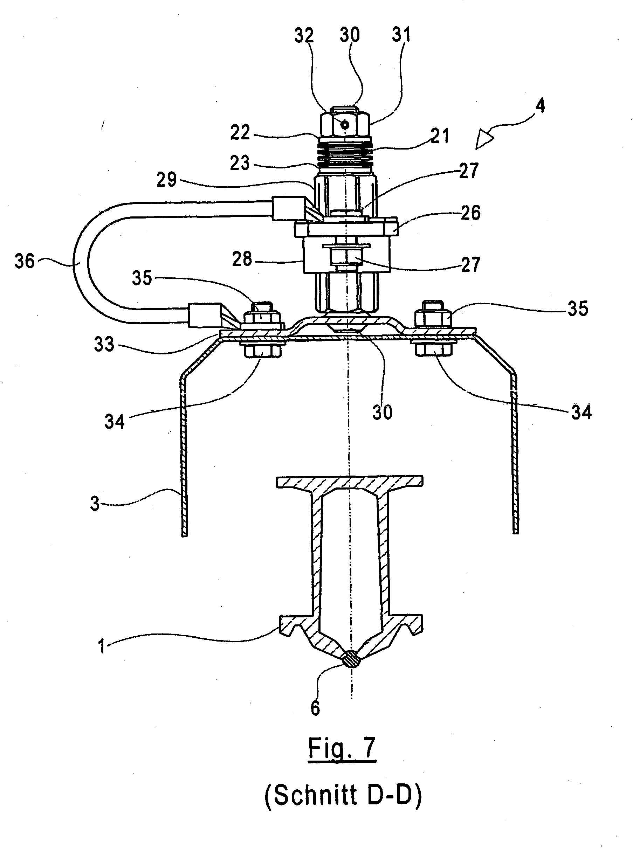

In den Fig. 1 bis 3 ist eine durchgehende langgestreckte Stromschiene 1 zu sehen, deren Profil in den Fig. 6 und 7 abgebildet ist. Stromschienen dieser Art halten einen Fahrdraht, der von einem Stromabnehmer eines Fahrzeuges kontaktiert wird. Die Stromschiene 1 wird an ortsfesten Tragwerken 2 befestigt, die beispielsweise an Tunnelwänden oder sonstigen baulichen Einrichtungen ortsfest gehalten sind. Die Tragwerke 2 sind generell bekannt. Ein Beispiel ist in der eingangs genannten DE 20 2009 013 786 U1 oder der DE 20 2004 009 416 U1 beschrieben. Da die Tragwerke 2 hinsichtlich Materialeinsatz und Montageaufwand sehr aufwendig sind, ist es wünschenswert, möglichst wenig Tragwerke einzusetzen, was bedeutet, den Abstand A zwischen benachbarten Tragwerken 2 möglichst groß zu machen. Andererseits soll die Stromschiene 1 in Bezug auf die Fahrebene möglichst exakt geradlinig verlaufen und sich zwischen zwei benachbarten Tragwerken 2 aufgrund ihres Eigengewichtes oder aufgrund einer Kraftbelastung durch den Stromabnehmer eines vorbeifahrenden Fahrzeuges nicht durchbiegen oder in Schwingungen geraten. Hieraus resultiert die entgegengesetzte Forderung möglichst geringer Abstände A zwischen benachbarten Tragwerken 2. In der Praxis werden bisher Tragwerksabstände A von ca. 7 bis 10m verwendet.

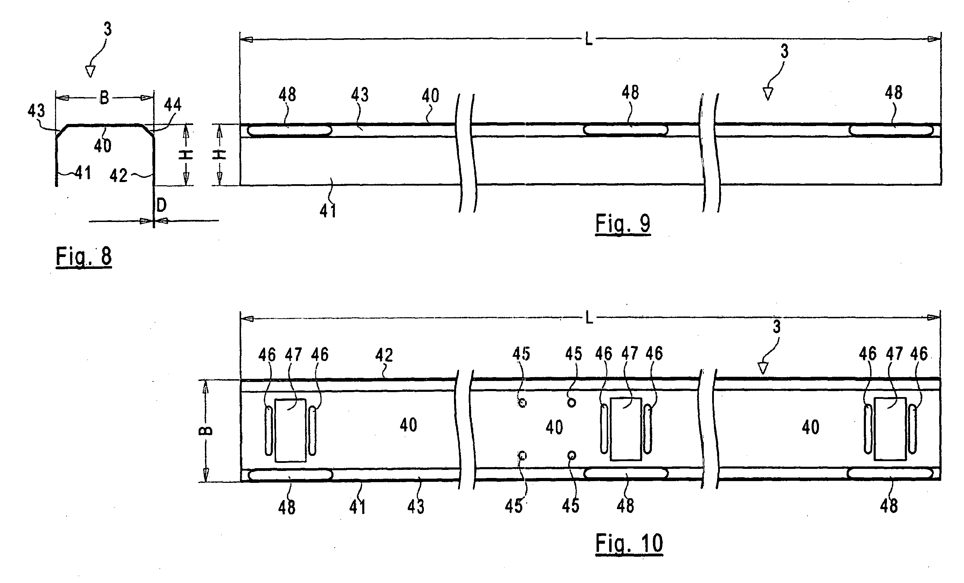

Die Erfindung verwendet langgestreckte Profilkörper 3 als Hilfsträger, die mittels Halteeinrichtungen 4 am Tragwerk 2 befestigt sind, wobei die Stromschiene 1 über eine oder mehrere Höhenverstelleinrichtungen 5 an den Profilkörpern 3 befestigt ist. Die Profilkörper 3 sind in Längsrichtung der Stromschiene 1 relativ biegesteif. In einem konkreten Ausführungsbeispiel, das in Fig. 8 bis 10 dargestellt ist, haben die Profilkörper 3 ein U-förmiges Querschnittsprofil, das für eine ausreichende Biegesteifigkeit sorgt.

Die Profilkörper 3 haben eine Länge L, die kleiner ist als der Abstand A zwischen zwei benachbarten Tragwerken 2. In einem bevorzugten Ausführungsbeispiel ist die Stromschiene 1 an jedem Profilkörper 3 über drei Höhenverstelleinrichtungen 5 befestigt, wobei diese jeweils im wesentlichen in der Mitte und im Bereich der beiden Enden der Profilkörper 3 angeordnet sind. Die einzelnen Höhenverstelleinrichtungen 5 bilden somit verstellbare Befestigungs- bzw. Aufhängepunkte für die Stromschiene 1 und sind möglichst in gleichen Abständen D1, D2, D3 zueinander längs der Stromschiene 1 angeordnet. Im Falle von drei Höhenverstelleinrichtungen pro Profilkörper 3 beträgt die Länge L der Profilkörper in etwa zwei Drittel des Abstandes A. Damit haben benachbarte Profilkörper 3 jeweils einen Abstand B zueinander, der im dem Abstand D3 entspricht und damit ein Drittel des Abstandes A beträgt. Die Abstände D1, D2 und D3 sollen daher auch weitestgehend gleich groß sein, um eine gleichmäßige Verteilung der Aufhängepunkte der Stromschiene 1 zu gewährleisten.

Dadurch, daß die Aufhängepunkte durch Höhenverstelleinrichtungen 5 gebildet sind, läßt sich die Höhenlage der Stromschiene 1 gegenüber der Fahrebene an jedem Aufhängepunkt einstellen, so daß Durchbiegungen bzw. ein Durchhang der Stromschiene 1 weitestgehend eliminiert werden können.

Auch die Halteeinrichtungen 4, an denen die Profilkörper 3 befestigt sind, sind höhenverstellbar, so daß die Höhenlage der Profilkörper 3 in Bezug auf die Fahrebene einstellbar ist.

In den dargestellten Ausführungsbeispielen sind die Halteeinrichtungen 4 und die mittlere Höhenverstelleinrichtung 5 als separate, gegeneinander versetzt angeordnete Elemente dargestellt, weshalb die Abstände D1 und D2 auch nicht exakt gleich groß sind. Es sei darauf hingewiesen, daß die Halteeinrichtungen 4 und die mittlere Höhenverstelleinrichtung 5 als ein kombiniertes Element ausgebildet sein können, das dann möglichst in der Mitte des Profilkörpers 3 anzuordnen ist und als bevorzugtes Ausführungsbeispiel der Erfindung angesehen wird.

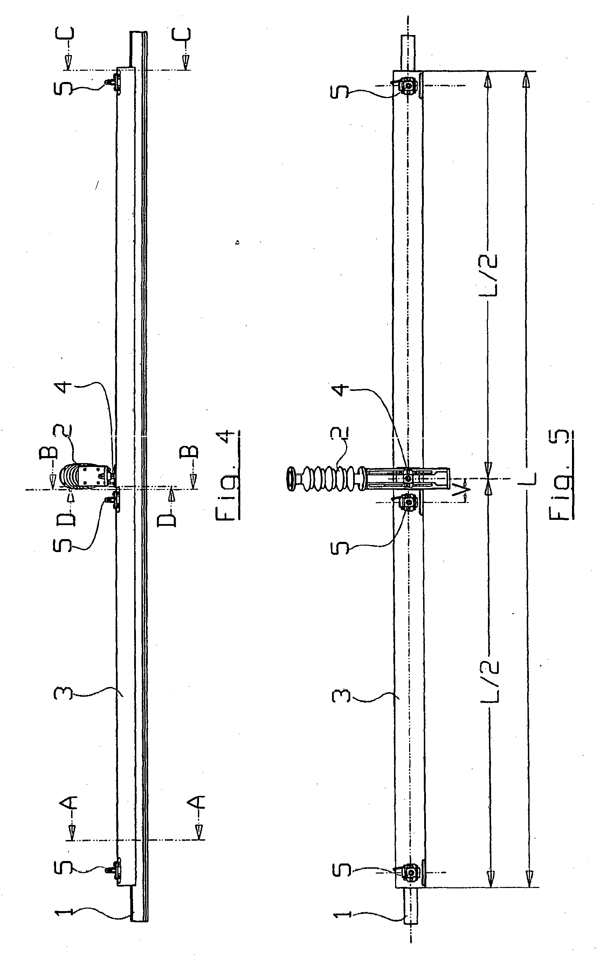

Die Fig. 4 und 5 zeigen eine Seitenansicht bzw. eine Draufsicht auf eine Stromschienenanordnung mit einem Profilkörper 3, der über eine in seiner Mitte angeordnete höhenverstellbare Halteeinrichtung 4 mit einem Tragwerk 2 verbunden ist und drei Höhenverstelleinrichtungen 5 aufweist, über die die Stromschiene 1 höhenverstellbar mit dem Profilkörper 3 verbunden ist. Die mittlere Höhenverstelleinrichtung 5 ist hier geringfügig gegenüber dem Tragwerk 2 in Längsrichtung der Stromschiene 1 versetzt angeordnet (Versatz V), um auch im Zusammenhang mit den Schnittzeichnungen A-A (Fig. 6) und D-D (Fig. 7) zu verdeutlichen, daß die Höhenverstellung des Profilkörpers 3 gegenüber dem Tragwerk 2 einerseits und die Höhenverstellung der Stromschiene 1 gegenüber dem Profilköper 3 andererseits unabhängig voneinander sind, d.h. unabhängig voneinander verstellt werden können.

Fig. 6 zeigt einen Schnitt längs der Linien A-A, B-B und C-C durch die Höhenverstelleinrichtung 5, mit der die Stromschiene 1 höhenverstellbar an dem Profilkörper 3 befestigt ist. In diesem Ausführungsbeispiel sind alle drei Höhenverstelleinrichtungen 5 eines Profilkörpers 3 identisch aufgebaut, so daß auch die Schnittansichten identisch sind. An der Stromschiene 1 ist ein Fahrdraht 6 eingeklemmt. Die Stromschiene 1 ist an einer Anschlußplatte 7 mittels Haltewinkeln 8 und Schrauben 9 befestigt. Von der Anschlußplatte 7 stehen zwei parallel zueinander verlaufende Wände 10 ab, in denen eine Pendelachse 11 drehbar gelagert ist. Die Pendelachse 11 ist durch ein Pendellager 12 hindurch gesteckt, in welches ein Dorn 13 eingeschraubt ist. Somit ist die Anschlußplatte 7 über das Pendellager 12 schwenkbar an dem Dorn 13 angelenkt, wobei die Pendelachse 11 quer zur Fahrtrichtung bzw. quer zur Längsachse der Stromschiene 1 angeordnet ist.

Die Höhenverstelleinrichtung 5 hat weiter eine Halteplatte 14, die auf der der Stromschiene 1 abgewandten Oberseite des Profilkörpers 3 aufliegt und durch Schrauben 15 und Muttern 16, die durch Bohrungen des Profilkörpers hindurchgreifen, befestigt ist. An der Halteplatte 14 ist eine erste Hülse 17 befestigt, beispielsweise angeschweißt, wobei diese erste Hülse 17 außen einen Sechskantbereich und ein Innengewinde aufweist, in das eine zweite Hülse 18, die ein Außengewinde aufweist, einschraubbar ist. Das Außengewinde der zweiten Hülse erstreckt sich nur über einen Teil der zweiten Hülse 18, die zumindest an ihrem oberen, der Stromschiene 1 abgewandten Ende einen Sechskantkopf trägt.

Die zweite Hülse 18 hat eine mittige Durchgangsbohrung, in die der zylindrische Dorn 13 einsetzbar ist. Der Dorn 13 hat an seinem oberen, der Stromschiene 1 abgewandten Ende ein Außengewinde, auf das eine Mutter 19 aufschraubbar ist, die mit einem Sicherungsstift 20 in Drehrichtung fixiert werden kann. Zwischen der Oberseite der zweiten Hülse 18 und der Unterseite der Mutter 19 ist ein Federpaket 21 angeordnet, wobei es sich beispielsweise um ein Paket aus mehren Tellerfedern handelt. Das Federpaket 21 ist zwischen zwei Ringscheiben 22 und 23 abgestützt. Der Dorn 13 ist in der Durchgangsbohrung um seine Längsachse drehbar gelagert und durch Einschrauben in das Pendellager 12 fixiert. Durch Verdrehen der Hülsen 17 und 18 gegeneinander kann somit die Höhenlage der Anschlußplatte 7 und damit der Stromschiene 1 relativ zur Halteplatte 14 und damit auch relativ zum Profilkörper 3 eingestellt und durch die Mutter 19 und den Sicherungsstift 20 fixiert werden.

Zur Gewährleistung einer guten elektrischen Verbindung zwischen einer vom Tragwerk 2 kommenden Stromversorgung zur Stromschiene 1 wird, wie noch im Zusammenhang mit Fig. 7 erläutert wird, der Profilkörper 3 elektrisch mit der Stromversorgung verbunden. An den einzelnen Befestigungspunkten, d.h. den Höhenverstelleinrichtungen 5 ist zur guten Stromversorgung der Stromschiene 1 an der Halteplatte 14, die über die Schraube 15 und die Mutter 16 fest mit dem Profilkörper 3 verbunden ist, ein Stromkabel 25 angeschlossen, das zur Anschlußplatte 7 führt und dort über die Verschraubung 9 und die Haltewinkel 8 eine verbesserte Stromzuführung zur Stromschiene 1 bewirkt und Verschweißungen durch Funkenbildung am Dorn, am Pendellager sowie der Kontaktfläche der Halteplatte 14 und dem Profilkörper 3 verhindert.

Fig. 7 zeigt einen Schnitt längs der Linie D-D der Fig. 4, d.h. eine geschnittene Ansicht der Halteeinrichtung 4 zur Befestigung des Profilkörpers 3 an dem Tragwerk 2. Die Halteeinrichtung 4 ist ähnlich aufgebaut, wie die Höhenverstelleinrichtung 5, jedoch im dargestellten Ausführungsbeispiel ohne das Pendellager.

Die Halteeinrichtung 4 hat eine Halteplatte 26, die funktionell der Halteplatte 14 des Ausführungsbeispiels der Fig. 6 entspricht. Die Halteplatte 26 wird an dem hier nicht dargestellten Tragwerk 2 über eine Verschraubung 27 befestigt. Weiter hat die Halteeinrichtung 4 eine erste Hülse 28, die mit der Halteplatte 26 verbunden, beispielsweise verschweißt ist und eine zweite Hülse 29, die mit einem Außengewinde in ein Innengewinde der ersten Hülse 28 eingeschraubt ist. Durch beide Hülsen hindurch erstreckt sich ein Dorn 30, der an seinem oberen, der Stromschiene 1 abgewandten Ende ein Außengewinde trägt, auf das eine Mutter 31 aufschraubbar ist, die durch einen Sicherungsstift 32 fixierbar ist. Das der Stromschiene 1 zugewandte untere Ende des Dornes 30 ist mit einer Anschlußplatte 33 verbunden, was durch Verschweißen, Verstemmen, Verschrauben oder auf sonstige Weise erfolgen kann. Die Anschlußplatte 33 wird über Schrauben 34 und Muttern 35 an dem Profilkörper 3 befestigt. Die Halteplatte 26 und die Anschlußplatte 33 sind auch hier über ein Stromkabel 36 elektrisch miteinander verbunden, wobei das Stromkabel 36 an der Halteplatte 26 durch die Verschraubung 27 und an der Anschlußplatte 33 über die Verschraubung 34, 35 befestigt ist. Auch hierdurch erfolgt eine gute Stromübertragung von der Halteplatte 26 zu dem Profilkörper 3.

Durch Verdrehen der zweiten Hülse 29 gegenüber der ersten Hülse 28 kann die Höhenlage der Anschlußplatte 33 und damit des Profilkörpers 3 gegenüber der Halteplatte 26 und damit gegenüber dem Tragwerk eingestellt werden, wobei die jeweilige Position bzw. Höhenlage durch Verschrauben der Mutter 31 fixiert werden kann.

Fig. 8 zeigt eine Stirnansicht des Profilkörpers 3, der hier als U-förmiges Abkantprofil aus einem Blech hergestellt ist, das eine Materialdicke D hat, die in einem bevorzugten Ausführungsbeispiel 2,5 bis 3.0 mm beträgt, was in etwa eine der Steifigkeit der Stromschiene entsprechende Steifigkeit ergibt. Die Höhe H beträgt dabei 120 mm und die Breite B 196 mm, wobei von einem mittleren Schenkel 40 im wesentlichen senkrecht abstehende Schenkel 41 und 42 jeweils mit einer Fase 43 bzw. 44, die unter einem Winkel von beispielsweise 45° verläuft, abgekantet sind. Die angegebenen Maße sind selbstverständlich nur ein konkretes Ausführungsbeispiel.

Die Fig. 9 und 10 zeigen eine Seitenansicht und eine Draufsicht eines zweifach abgeschnittenen Profilkörpers der Länge L. Der mittlere Schenkel 40 hat in seiner Mitte vier Bohrungen 45 zur Aufnahme der Schrauben 34 der Anschlußplatte 33 (Fig. 7) und daneben eine rechteckige Ausnehmung 47 zum Einsetzen der Höhenverstelleinrichtung 5 deren Abmessungen so zu wählen sind, daß die erste Hülse 17 (Fig. 6) eingesetzt werden kann. Neben der Ausnehmung 45 sind zwei Langlöcher 46 angeordnet zum Einsetzen der Schrauben 34 (Fig. 6). Aufgrund der Langlöcher 46 kann die Positionierung der Aufhängung in Bezug quer zur Fahrtrichtung justiert werden. In entsprechender Weise sind an den beiden Endabschnitten des Profilkörpers 3 Aussparrungen 47 und Langlöcher 46 vorgesehen, um auch dort Höhenverstelleinrichtungen 5 anbringen zu können.

Im Bereich einer der Fasen 43 oder 44 sind gegenüberliegend zu den Ausnehmungen 47 Langlöcher 48 vorgesehen, um mit einem Werkzeug, wie z.B. einem Schraubenschlüssel das Sechskantende der ersten Hülse 17 für die Höheneinstellung und die Schrauben 15 für die Fixierung der Halteplatte 14 am Profilkörper 3 ergreifen zu können.

Der hier gezeigte Profilkörper 3 hat aufgrund seines Profiles eine ausreichende Biegesteifigkeit bezogen auf seine Längserstreckung, so daß er auch im Bereich seiner Enden eine ausreichende Tragfähigkeit für die Halterung einer Stromschiene 1 hat.

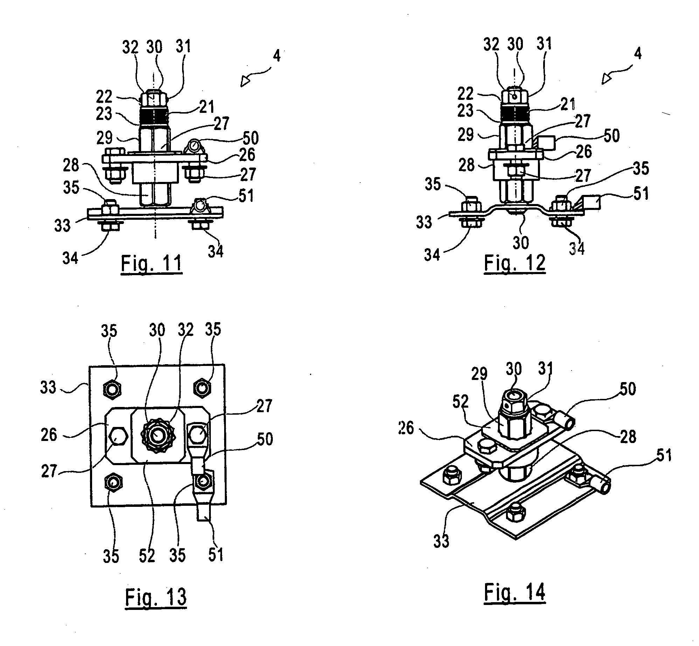

Die Fig. 11 bis 14 zeigen zwei Seitenansichten, eine Draufsicht und eine perspektivische Ansicht der Halteeinrichtung 4, die im Zusammenhang mit Fig. 7 bereits ausführlich beschrieben wurde, wobei das Stromkabel 36 fortgelassen ist und lediglich Polschuhe 50 und 51 gebildet sind, an denen das Stromkabel 36 anzubringen ist. Alle übrigen Elemente sind im Zusammenhang mit Fig. 7 bereits ausführlich beschrieben, so daß auf diese unter Verweis auf die in den Fig. 11 bis 14 eingetrag0enen Bezugszeichen Bezug genommen werden kann. Ergänzend zu der Beschreibung der Fig. 7 sei noch auf ein Sicherungsblech 52 verwiesen, das an den Sechskantkopf der zweiten Hülse 29 angepaßt ist und an der Verschraubung 27 abgestützt ist, um ein Verdrehen der beiden Hülse 28 und 29 gegeneinander zu verhindern.

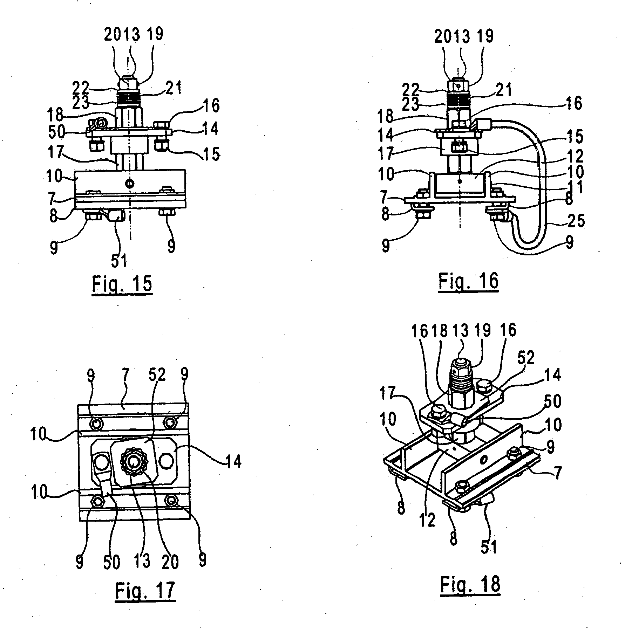

Die Fig. 15, 16, 17 und 18 zeigen zwei Seitenansichten eine Draufsicht bzw. eine perspektivische Ansicht der Höhenverstelleinrichtung 5, die im Zusammenhang mit Fig. 6 bereits ausführlich beschrieben wurde. Auch hier ist das Stromkabel 25 fortgelassen und statt dessen sind nur Polschuhe 50 und 51 dargestellt, an die das Stromkabel 25 angeschlossen wird. Entsprechend dem Sicherungsblech 52 bei der Halteeinrichtung 4 ist auch hier ein Sicherungsblech 52 vorhanden, das die zweite Hülse 18 gegen Verdrehen sichert. Alle übrigen Teile wurden im Zusammenhang mit Fig. 6 bereits ausführlich beschrieben, so daß auch hier unter Verweis auf die Bezugszeichen auf die Beschreibung der Fig. 6 Bezug genommen werden kann.

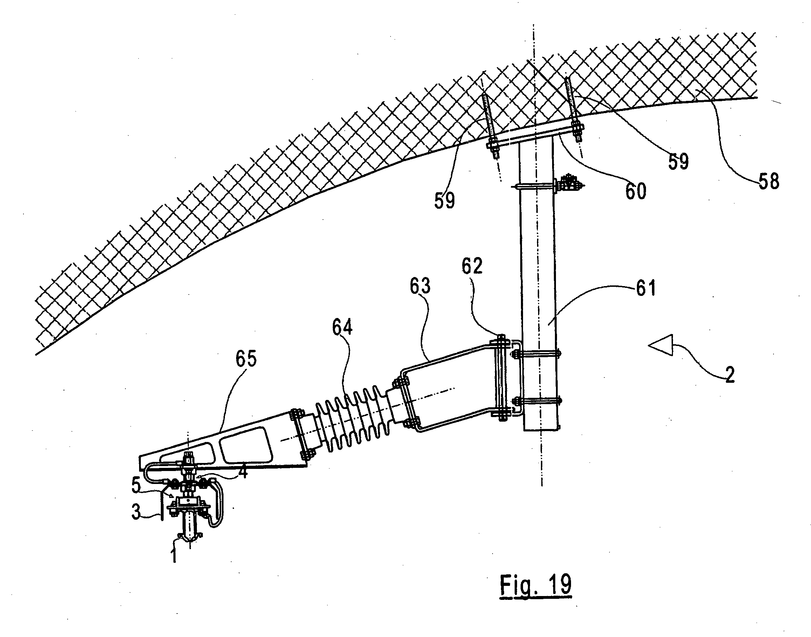

Fig. 19 zeigt eine Ansicht eines Tragwerkes 2, an dem die Stromschiene 1 mit dem Profilkörper 3 aufgehängt wird. Das Tragwerk 2 ist hier an einer Tunnelwand 58 mit Dübeln 59 befestigt, die über eine Rohrplatte 60 ein Tragrohr 61 halten. Am Tragrohr 61 ist über ein Schwenkgelenk 62 ein erster Träger 63 befestigt, der über einen Isolator 64 mit einem zweiten Träger 65 verbunden ist, an welchem das Halteelement 4 mit seiner Tragplatte 33 angeschraubt ist.

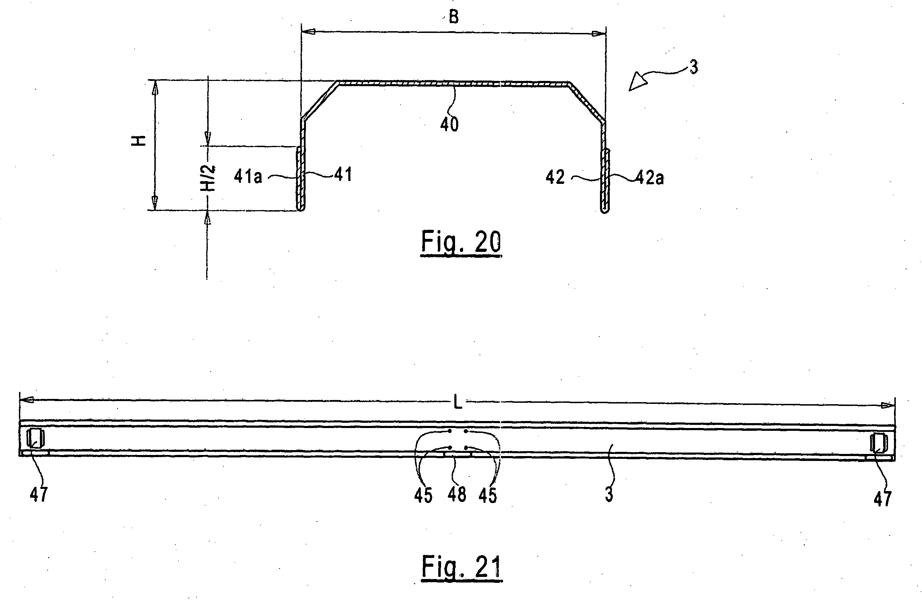

Fig. 20 zeigt eine Stirnansicht des Profilkörpers 3 nach einem zweiten Ausführungsbeispiel, bei dem der Profilkörper ebenfalls als U-förmiges Abkantprofil aus einem Blech hergestellt ist und ebenfalls einen mittleren Schenkel 40 und im wesentlichen senkrecht davon abstehende Schenkel 41 und 42 aufweist, wobei die Schenkel 41 und 42 durch Umbiegen des Bleches um 90° bis 180° verstärkt sind. Dadurch kann die Höhe H gegenüber dem Ausführungsbeispiel der Fig. 8 verringert werden und beispielsweise 80mm betragen, wobei die um 90° bis 180° zurückgebogenen Schenkel 41a und 42a etwa die Hälfte der Höhe H betragen, d.h. beispielsweise eine Länge von 40mm haben. Hierdurch wird bei geringerer Bauhöhe H eine verbesserte Biegesteifigkeit erreicht bzw. in Bezug auf Fig. 8 im wesentlichen dieselbe Biegesteifigkeit erreicht.

Bei den in Zusammenhang mit den nachfolgend beschriebenen Fig. 21 bis 26 beschriebenen Ausführungsbeispiel hat das Halteelement 4 auch die Funktion der Höhenverstelleinrichtung. Die Bohrungen 45 des Ausführungsbeispiels der Fig. 10 können daher mittig zur Längserstreckung L des Profilkörpers 3 angebracht sein und die Öffnungen 46 und 47 der Fig. 10 können fortgelassen werden.

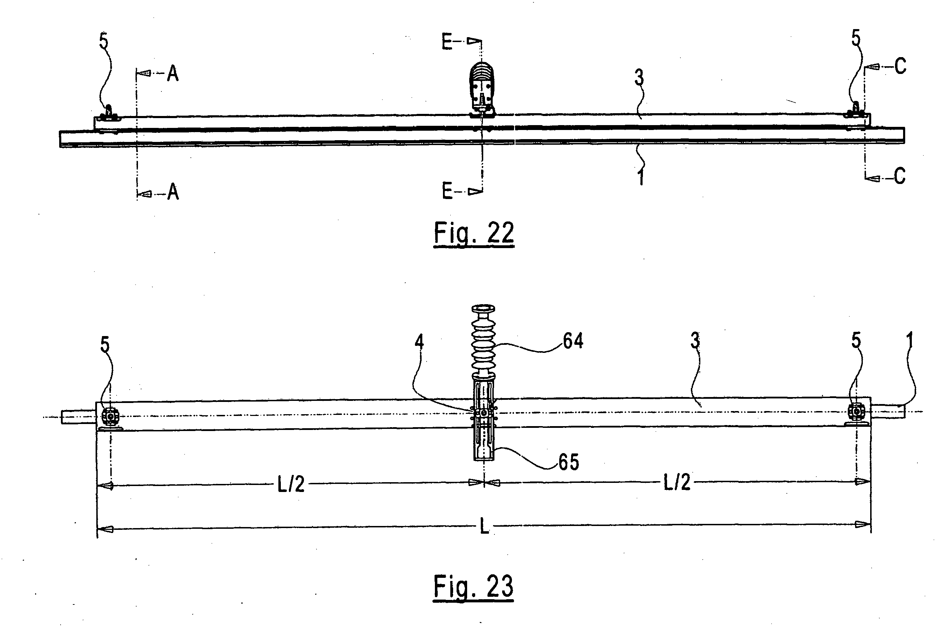

Dementsprechend unterscheiden sich die Fig. 22 und 23 von den Fig. 4 und 5 dadurch, daß die mittlere Höhenverstelleinrichtung 5 fortgelassen ist, da die Stromschiene auch in diesem Bereich mit dem Profilkörper 3 verbunden ist. Die seitlichen Höhenverstelleinrichtungen 5 entsprechen den oben beschriebenen Ausführungsbeispielen, so daß auch die Schnitte A-A und C-C mit den zuvor geschilderten Beispielen identisch sind.

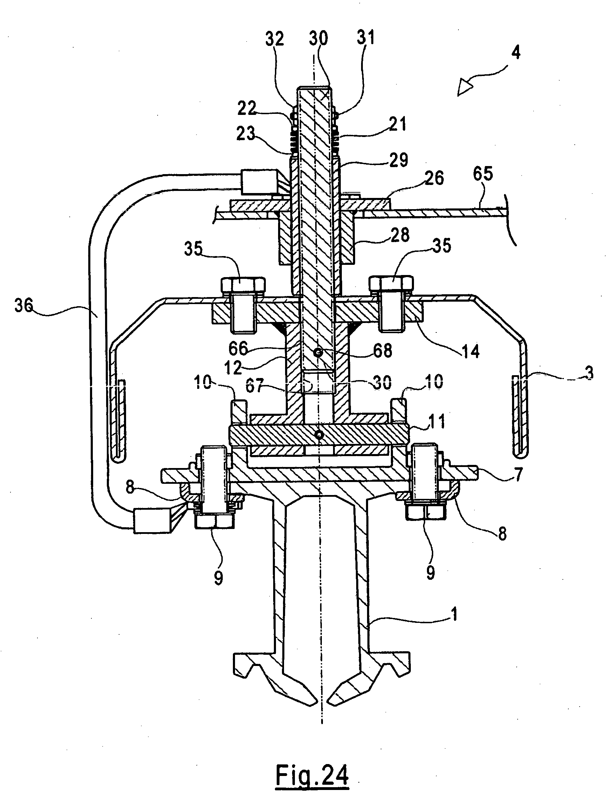

Fig. 24 zeigt einen Schnitt längs der Linie E-E, d.h. auf die Halteeinrichtung 4, bei welcher abweichend vom Ausführungsbeispiel der Fig. 7 die Stromschiene 1 an der Halteeinrichtung 4 befestigt ist und keine separate Höhenverstelleinrichtung hat.

Die Halteeinrichtung 4 ist im wesentlichen gemäß dem Ausführungsbeispiel der Fig. 7 aufgebaut, insbesondere bezüglich der Höhenverstellbarkeit, bei der die zweite Hülse 29 mit ihrem Außengewinde in die erste Hülse 28 einschraubbar ist und die erste Hülse 28 mit der Halteplatte 26 verbunden ist.

Der Dorn 30 ragt hier jedoch durch eine Öffnung des Profilkörpers 3 hindurch und hat auch an seinem unteren, der Stromschiene 1 zugewandten Ende ein Außengewinde 66, das in ein Innengewinde 67 des T-förmigen Pendellagers 12 einschraubbar und durch einen Sicherungsstift 68 fixierbar ist. Das Pendellager ist hier T-förmig aufgebaut, wobei die Pendelachse 11 und die Längsachse des Dornes 30 senkrecht zueinander stehen.

Die Halteplatte 14, an der die Profilschiene 3 befestigt wird, ist bei diesem Ausführungsbeispiel auf der der Stromschiene 1 zugewandten Seite des Profilkörpers 3 angeordnet und durch die Schrauben 34 befestigt, wobei die Halteplatte 14 Gewindebohrungen haben kann oder die Schrauben 35 auch durch Muttern befestigt sein können.

Die Halteplatte 14 und der vertikale Schenkel des T-förmigen Pendellagers 12 können miteinander verbunden, beispielsweise verschweißt sein. Das Stromkabel 36 kann hier von der Halteplatte 26 direkt zu den Haltewinkeln 8 und damit zur Anschlußplatte 7 verlaufen. Kurz zusammengefaßt ist bei diesem Ausführungsbeispiel die Höhenverstellbarkeit in der Mitte des Profilkörpers 3 durch die Halteeinrichtung 4 realisiert, während eine Höhenverstellbarkeit der Stromschiene 1 relativ zu dem Profilkörper 3 an dieser Stelle nicht erforderlich ist, die Stromschiene 1 jedoch auch an dieser Stelle durch das Pendellager 12 pendelnd bzw. schwenkbar befestigt ist.

## Patentansprüche

1. Stromschienenanordnung zur Speisung von elektrischen Triebfahrzeugen, mit einer starren Stromschiene (1) und in Längsrichtung der Stromschiene (1) verteilt angeordneten Halteeinrichtungen (4), die an ortsfesten Tragwerken (2) befestigbar sind, **dadurch gekennzeichnet, daß**
- die Stromschiene (1) an mehreren langgestreckten Profilkörpern (3) befestigt ist, deren Länge (L) zwei Drittel des Abstandes (A) benachbarter Halteeinrichtungen (4) entspricht,
- der Abstand (B) benachbarter Profilkörper (3) zueinander ein Drittel des Abstandes (A) benachbarter Halteeinrichtungen (4) entspricht,
- die Stromschiene (1) an jedem Profilkörper (3) an mehreren Stellen befestigt ist, und
- die Halteeinrichtung (4) im mittleren Bereich der Längserstreckung (L) der Profilkörper (3) befestigt ist.

2. Stromschienenanordnung nach Anspruch 1, **dadurch gekennzeichnet, dass** die Stromschiene (1) an dem Profilkörper (3) mittels mindestens einer Höhenverstelleinrichtung (5) befestigt ist.

3. Stromschienenanordnung nach Anspruch 1, **dadurch gekennzeichnet, dass** die Stromschiene (1) an dem Profilkörper (3) in Bezug auf eine Höhenverstellbarkeit starr befestigt ist.

4. Stromschienenanordnung nach einem der Ansprüche 1 bis 3, **dadurch gekennzeichnet, dass** die Halteeinrichtung (4) höhenverstellbar ist.

5. Stromschienanordnung nach einem der Ansprüche 1 bis 4, dass die Stromschiene (1) an dem Profilkörper (3) gelenkig befestigt ist.

6. Stromschienenanordnung nach einem der Ansprüche 1 bis 5, **dadurch gekennzeichnet, dass** die Stromschiene (1) an dem Profilkörper (3) längsverschieblich befestigt ist.

7. Stromschienenanordnung nach einem der Ansprüche 1 bis 6, **dadurch gekennzeichnet, dass** der Profilkörper (3) an dem Tragwerk (2) längsverschieblich befestigt ist.

8. Stromschienanordnung nach einem der Ansprüche 1 bis 7, **dadurch gekennzeichnet, dass** die Stromschiene (1) an jeden Profilkörper (3) mit drei Höhenverstelleinrichtungen (5) befestigt ist, wobei eine Höhenverstelleinrichtung (5) in der Mitte des Profilkörpers (3) und die beiden anderen Höhenverstelleinrichtungen (5) im Bereich der Enden des Profilkörpers (3) angeordnet sind.

9. Stromschienenanordnung nach einem der Ansprüche 1 bis 8, **dadurch gekennzeichnet, dass** der Profilkörper (3) ein U-förmiges Querschnittsprofil hat.

10. Stromschienenanordnung nach Anspruch 9, **dadurch gekennzeichnet, dass** der Profilkörper (3) ein Abkantprofil eines Bleches ist, dessen mittlerer Schenkel (40) Öffnungen (45, 46, 47) zur Befestigung der Halteeinrichtung (4) und der Höhenverstelleinrichtung (5) aufweist.

11. Stromschienenanordnung nach Anspruch 10, **dadurch gekennzeichnet, dass** der Profilkörper (3) im Bereich der Öffnungen (45, 46, 47) in einem seiner seitlichen Schenkel (41, 42) je ein Langloch (48) aufweist.

12. Stromschienanordnung nach einem der Ansprüche 1 bis 11, **dadurch gekennzeichnet, dass** die Höhenverstelleinrichtungen (5) Federn (21) aufweisen, zur federelastischen Verbindung der Stromschiene (1) mit dem Profilkörper (3).

13. Stromschienenanordnung nach einem der Ansprüche 1 bis 12, **dadurch gekennzeichnet**, **dadurch gekennzeichnet, dass** die Halteeinrichtung (4) Federn (21) aufweisen, zur federelastischen Verbindung des Profilkörpers (3) mit dem ortsfesten Tragwerk (2).

14. Stromschienenanordnung nach einem der Ansprüche 1 bis 13, **dadurch gekennzeichnet, dass** die Halteeinrichtung (4) und die mittlere Höhenverstelleinrichtung (5) eines Profilkörpers (3) zu einem Bauelement integriert sind.

## Claims

1. A conductor rail arrangement for the power supply of electric traction vehicles, comprising a rigid conductor rail (1) and holding devices (4) which are arranged in a distributed manner in the longitudinal direction of the conductor rail (1) and which can be fastened to stationary supporting **characterized in that**
- the conductor rail (1) is fastened to several elongated profile bodies (3), the length (L) of the profile bodies (3) corresponds to two-thirds of the distance (A) of adjacent holding devices (4),
- the distance (B) of adjacent profile bodies (3) with respect to each other corresponds to one-third of the distance (A) of adjacent holding devices (4),
- the conductor rail (1) is fastened to each profile body (3) at several points, and
- the holding device (4) is fastened in the middle region of the longitudinal extension (L) of the profile bodies (3).

2. A conductor rail arrangement according to claim 1, **characterized in that** the conductor rail (1) is fastened to the profile body (3) by means of at least one height-adjustment device (5).

3. A conductor rail arrangement according to claim 1, **characterized in that** the conductor rail (1) is rigidly fastened to the profile body (3) with respect to height adjustability.

4. A conductor rail arrangement according to one of the claims 1 to 3, **characterized in that** the holding device (4) is height-adjustable.

5. A conductor rail arrangement according to one of the claims 1 to 4, **characterized in that** the conductor rail (1) is fastened to the profile body (3) in an articulated manner.

6. A conductor rail arrangement according to one of the claims 1 to 5, **characterized in that** the conductor rail (1) is fastened to the profile body (3) in a longitudinally displaceable manner.

7. A conductor rail arrangement according to one of the claims 1 to 6, **characterized in that** the profile body (3) is fastened to the supporting frame (2) in a longitudinally displaceable manner.

8. A conductor rail arrangement according to one of the claims 1 to 7, **characterized in that** the conductor rail (1) is fastened to each profile body (3) with three height-adjustment devices (5), with one height-adjustment device (5) being arranged in the middle of the profile body (3) and the two other height-adjustment devices (5) in the region of the ends of the profile body (3).

9. A conductor rail arrangement according to one of the claims 1 to 8, **characterized in that** the profile body (3) has a U-shaped cross-sectional profile.

10. A conductor rail arrangement according to claim 9, **characterized in that** the profile body (3) is a canted profile of a sheet, the middle limb (40) of which comprises openings (45, 46, 47) for fastening the holding device (4) and the height-adjustment device (5).

11. A conductor rail arrangement according to claim 10, **characterized in that** the profile body (3) comprises one respective oblong hole (48) in the region of the openings (45, 46, 47) in one of its lateral limbs (41, 42).

12. A conductor rail arrangement according to one of the claims 1 to 11, **characterized in that** the height-adjustment devices (5) comprise springs (21) for spring-elastic connection of the conductor rail (1) with the profile body (3).

13. A conductor rail arrangement according to one of the claims 1 to 12, **characterized in that** the holding devices (4) comprise springs (21) for the spring-elastic connection of the profile body (3) with the stationary supporting frame (2).

14. A conductor rail arrangement according to one of the claims 1 to 13, **characterized in that** the holding device (4) and the middle height-adjustment device (5) of a profile body (3) are integrated into a component.

## Revendications

1. Dispositif de rail d'alimentation pour l'alimentation de véhicules automoteurs électriques, avec un rail d'alimentation rigide (1) et des dispositifs de retenue (4) répartis dans le sens longitudinal du rail d'alimentation (1) qui peuvent être fixés sur des structures porteuses (2) fixes, **caractérisé en ce que**
- le rail d'alimentation (1) est fixé sur plusieurs corps profilés (3), étirés en longueur, dont la longueur (L) correspond aux deux tiers de la distance (A) entre des dispositifs de retenue contigus (4),
- la distance (B) entre des corps profilés contigus (3) correspond à un tiers de la distance (A) entre des dispositifs de retenue (4) contigus,
- le rail d'alimentation (1) est fixé sur chaque corps profilé (3) à plusieurs endroits, et
- le dispositif de retenue (4) est fixé dans la zone médiane de l'étendue longitudinale (L) des corps profilés (3).

2. Dispositif de rail d'alimentation selon la revendication 1, **caractérisé en ce que** le rail d'alimentation (1) est fixé sur le corps profilé (3) à l'aide d'au moins un dispositif de réglage en hauteur (5).

3. Dispositif de rail d'alimentation selon la revendication 1, **caractérisé en ce que** le rail d'alimentation (1) est fixé sur le corps profilé (3) avec une possibilité de réglage en hauteur.

4. Dispositif de rail d'alimentation selon l'une quelconque des revendications 1 à 3, **caractérisé en ce que** le dispositif de retenue (4) est réglable en hauteur.

5. Dispositif de rail d'alimentation selon l'une quelconque des revendications 1 à 4, **caractérisé en ce que** le rail d'alimentation (1) est fixé par articulation sur le corps profilé (3).

6. Dispositif de rail d'alimentation selon l'une quelconque des revendications 1 à 5, **caractérisé en ce que** le rail d'alimentation (1) est fixé de manière mobile longitudinalement sur le corps profilé (3).

7. Dispositif de rail d'alimentation selon l'une quelconque des revendications 1 à 6, **caractérisé en ce que** le corps profilé (3) est fixé de manière mobile longitudinalement sur la structure porteuse (2).

8. Dispositif de rail d'alimentation selon l'une quelconque des revendications 1 à 7, **caractérisé en ce que** le rail d'alimentation (1) est fixé sur chaque corps profilé (3) avec trois dispositifs de réglage en hauteur (5), un dispositif de réglage en hauteur (5) étant disposé au milieu du corps profilé (3), et les deux autres dispositifs de réglage en hauteur (5) étant disposés dans les zones d'extrémités du corps profilé (3).

9. Dispositif de rail d'alimentation selon l'une quelconque des revendications 1 à 8, **caractérisé en ce que** le corps profilé (3) présente un profil de section transversale en U.

10. Dispositif de rail d'alimentation selon la revendication 9, **caractérisé en ce que** le corps profilé (3) est un profilé en tôle pliée, dont la branche médiane (40) présente des ouvertures (45, 46, 47) pour la fixation du dispositif de retenue (4) et du dispositif de réglage en hauteur (5).

11. Dispositif de rail d'alimentation selon la revendication 10, **caractérisé en ce que** le corps profilé (3) présente à chaque fois un trou oblong (48), dans la zone des ouvertures (45, 46, 47), dans l'une de ses branches latérales (41, 42).

12. Dispositif de rail d'alimentation selon l'une quelconque des revendications 1 à 11, **caractérisé en ce que** les dispositifs de réglage en hauteur (5) comprennent des ressorts (21) pour la liaison élastique du rail d'alimentation (1) au corps profilé (3).

13. Dispositif de rail d'alimentation selon l'une quelconque des revendications 1 à 12, **caractérisé en ce que** le dispositif de retenue (4) comprend des ressorts (21) pour la liaison élastique du corps profilé (3) avec la structure porteuse (2) fixe.

14. Dispositif de rail d'alimentation selon l'une quelconque des revendications 1 à 13, **caractérisé en ce que** le dispositif de retenue (4) et le dispositif de réglage en hauteur médian (5) d'un corps profilé (3) sont intégrés en un élément structurel.
